# EUROPEAN PATENT SPECIFICATION

(11) **EP 4 579 119 B1**
(45) Date of publication and mention of the grant of the patent: **18.11.2026**
(21) Application number: 24223439.1
(22) Date of filing: 27.12.2024
(51) Int. Cl.: F17C 3/00

(54) **COMPOSITE STORAGE TANK FOR LIQUID HYDROGEN AND METHODS OF MANUFACTURING**
VERBUNDSPEICHERTANK FÜR FLÜSSIGEN WASSERSTOFF UND VERFAHREN ZUR HERSTELLUNG
RÉSERVOIR DE STOCKAGE COMPOSITE POUR HYDROGÈNE LIQUIDE ET PROCÉDÉS DE FABRICATION

(30) Priority: 29.12.2023 US 202363616097 P
(43) Date of publication of application: 02.07.2025
(73) Proprietor: General Electric Company, Cincinnati, Ohio 45215 (US)
(72) Inventor: ZHENG, Li, Niskayuna 12309 (US); KRAY, Nicholas, West Chester 45069 (US); SUN, Changjie, Niskayuna 12309 (US); BARUA, Ananda, Niskayuna 12309 (US)
(74) Representative: Openshaw & Co.

(56) References cited:
- WO-A1-2007/106035
- KR-A- 20200 033 377
- KR-A- 20220 117 827
- US-B1- 6 668 561
- US-B2- 11 559 964

## Description

### CROSS REFERENCE TO RELATED APPLICATIONS

The present application claims the benefit of Provisional Patent Application No. 63/616,097, filed on December 29, 2023.

### TECHNICAL FIELD

The present disclosure relates to composite storage tanks for storing liquid hydrogen and methods of manufacturing the composite storage tanks, particularly, composite storage tanks for aircraft.

### BACKGROUND

The propulsion system for commercial aircraft typically includes one or more aircraft engines, such as turbofan jet engines. These engines may be powered by aviation turbine fuel, which is, typically, a combustible hydrocarbon liquid fuel, such as a kerosene-type fuel, having a desired carbon number and carbon-to-hydrogen ratio. Such fuel produces carbon dioxide upon combustion, and improvements to reduce or to eliminate such carbon dioxide emissions in commercial aircraft are desired.

KR20220117827A discloses a liquid hydrogen storage container.

### BRIEF DESCRIPTION OF THE DRAWINGS

The invention is set out in the appended set of claims.

Features and advantages of the present disclosure will be apparent from the following description of various exemplary embodiments, as illustrated in the accompanying drawings, wherein like reference numbers generally indicate identical, functionally similar, and/or structurally similar elements.
FIG. 1 is a schematic view of an aircraft having a hydrogen fuel system.
FIG. 2 is a schematic, cross-sectional view of one of the turbine engines of the aircraft shown in FIG. 1.
FIG. 3 is a schematic view of a composite hydrogen storage tank.
FIG. 4 is a cross sectional view of the composite hydrogen storage tank shown in FIG. 3 taken along line 4-4 in FIG. 3.
FIGS. 5A, 5B, and 5C are cross-sectional views of the composite hydrogen storage tank. FIG. 5A is a cross-sectional view of the composite hydrogen storage tank shown in FIG. 3 taken along line 4-4 in FIG. 3. FIGS. 5B and 5C are cross-sectional views similar to FIG. 5A but show alternate buffer and stiffener configurations within the composite hydrogen storage tank.
FIGS. 6A, 6B, 6C, and 6D are schematic views of different flow structures that may be used in the buffers of the composite hydrogen storage tank shown in FIG. 5A.
FIG. 7 is a flow chart of a process for manufacturing the composite hydrogen storage tank.
FIG. 8 is a schematic, cross-sectional view of a receiver on a layup tool during a step of the method of FIG. 7.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first," "second," "third," and the like, may be used interchangeably to distinguish one component from another and are not intended to signify location or importance of the individual components.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

As used herein, a "hydrogen fuel" is a combustible composition or a compound that includes diatomic hydrogen. More specifically, the hydrogen fuel can include at least eighty weight percent diatomic hydrogen, at least ninety weight percent diatomic hydrogen, at least ninety-five weight percent diatomic hydrogen, or at least ninety-nine weight percent diatomic hydrogen by total weight of the fuel. In some embodiments, the hydrogen fuel can consist essentially of diatomic hydrogen. The hydrogen fuel can exist in one or more phases such as a liquid phase, a gaseous phase, or combinations thereof.

As used herein, a "liquid hydrogen" is diatomic hydrogen substantially completely in the liquid phase. The liquid hydrogen can include at least eighty weight percent diatomic hydrogen, at least ninety weight percent diatomic hydrogen, at least ninety-five weight percent diatomic hydrogen, or at least ninety-nine weight percent diatomic hydrogen by total weight of the fuel. In some embodiments, the liquid hydrogen can consist essentially of diatomic hydrogen.

As used herein, a "gaseous hydrogen" is diatomic hydrogen substantially completely in the gaseous phase. The gaseous hydrogen can include at least eighty weight percent diatomic hydrogen, at least ninety weight percent diatomic hydrogen, at least ninety-five weight percent diatomic hydrogen, or at least ninety-nine weight percent diatomic hydrogen by total weight of the fuel. In some embodiments, the gaseous hydrogen can consist essentially of diatomic hydrogen.

As used herein, the term "substantially completely" as used to describe a phase of the hydrogen fuel refers to at least seventy-five percent by mass of the described portion of the hydrogen fuel being in the stated phase, such as at least eighty-five percent, such as at least ninety percent, such as at least ninety-two and a five tenths percent, such as at least ninety-five percent, such as at least ninety-seven and a five tenths percent, or such as at least ninety-nine percent by mass of the described portion of the hydrogen fuel being in the stated phase.

The singular forms "a," "an," and "the" include plural references unless the context clearly dictates otherwise.

Here and throughout the specification and claims, range limitations are combined and interchanged. Such ranges are identified and include all the sub-ranges contained therein unless context or language indicates otherwise. For example, all ranges disclosed herein are inclusive of the endpoints, and the endpoints are independently combinable with each other.

As used herein, the terms "additively manufactured" or "additive manufacturing processes" refer generally to manufacturing processes wherein successive layers of material(s) are provided on each other to "build-up," layer-by-layer, a three-dimensional component. The successive layers generally fuse together to form a monolithic component which may have a variety of integral sub-components. Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, the methods and structures disclosed herein can be practiced with any additive manufacturing technique or manufacturing technology, such as layer-additive processes, layer-subtractive processes, or hybrid processes.

The term "composite," as used herein, is indicative of a material having two or more constituent materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), a metal matrix composite (MMC). The composite may be formed of a matrix material and a reinforcing element, such as a fiber (referred to herein as a reinforcing fiber).

As used herein "reinforcing fibers" may include, for example, glass fibers, carbon fibers, steel fibers, or para-aramid fibers, such as Kevlar^{®} available from DuPont of Wilmington, Delaware. The reinforcing fibers may be in the form of fiber tows that include a plurality of fibers that are formed into a bundle. The polymeric matrix material may include, for example, epoxy resin, bismaleimide (BMI) resin, polyimide resin, or thermoplastic resin.

As used herein, a "composite component" refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength.

One or more layers of adhesive can be used in forming or coupling composite components. The adhesive can require curing at elevated temperatures or other hardening techniques.

As used herein, PMC refers to a class of materials. The PMC material may be a prepreg. A prepreg is a reinforcement material (e.g., a reinforcing fiber) pre-impregnated with a polymer matrix material, such as thermoplastic resin. Non-limiting examples of processes for producing thermoplastic prepregs include hot melt pre-pregging in which the fiber reinforcement material is drawn through a molten bath of resin and powder pre-pregging in which a resin is deposited onto the fiber reinforcement material, by way of a non-limiting example, electrostatically, and then adhered to the fiber, by way of a non-limiting example, in an oven or with the assistance of heated rollers.

Resins for matrix materials of PMCs can be generally classified as thermosets or thermoplastics. Thermoplastic resins are generally categorized as polymers that can be repeatedly softened and caused to flow when heated, and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

Instead of using a prepreg with thermoplastic polymers, another non-limiting example utilizes a woven fabric. Woven fabrics can include, but are not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and the reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include prepreg, braided material, woven material, or any combination thereof. Resin can be pumped into or otherwise provided to the mold or the cavity to impregnate the dry fibers. The combination of the impregnated fibers and the resin is then cured and removed from the mold. When removed from the mold, the composite component can require post-curing processing. RTM may be a vacuum assisted process. That is, air from the cavity or the mold can be removed and replaced by the resin prior to heating or curing. The placement of the dry fibers also can be manual or automated. The dry fibers can be contoured to shape the composite component or to direct the resin. Optionally, additional layers or reinforcing layers of a material differing from the dry fiber can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to by their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled (e.g., form fiber tows) and/or coated prior to inclusion within the matrix. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or a burn-out to yield a high char residue in the preform, and subsequent melt-infiltration with silicon, or a cure or a pyrolysis to yield a silicon carbide matrix in the preform, and subsequent chemical vapor infiltration with silicon carbide. Additional steps may be taken to improve densification of the preform, either before or after chemical vapor infiltration, by injecting the preform with a liquid resin or a polymer followed by a thermal processing step to fill the voids with silicon carbide. CMC material as used herein may be formed using any known or hereafter developed methods, including, but not limited to, melt infiltration, chemical vapor infiltration, polymer impregnation pyrolysis (PIP), or any combination thereof.

As used herein, an alloy is "based" on a particular element when that element is present in the alloy at the greatest weight percent, by total weight of the alloy, of all elements contained in the alloy. For example, an iron-based alloy has a higher weight percentage of iron than any other single element present in the alloy.

The term "metallic" as used herein in reference to a material that is a metal-based material. Such metals include, but not limited to, titanium, iron, aluminum, stainless steel, and nickel alloys. A metallic material or a metal-alloy can be a combination of at least two or more elements or materials, where at least one is a metal.

Combustible hydrocarbon liquid fuel, such as Jet-A fuel, has long been used in turbine engines for aircraft. The fuel storage aboard the aircraft has been designed for such fuels. A hydrogen fuel (e.g., diatomic hydrogen) may be utilized to eliminate carbon dioxide emissions from commercial aircraft. Hydrogen fuel, however, poses a number of challenges as compared with combustible hydrocarbon liquid fuel. For example, in its gaseous form, hydrogen fuel has a much lower power density than Jet-A fuel. Even when hydrogen fuel is stored in the liquid phase, the liquid hydrogen fuel requires approximately four times the volume of Jet-A fuel to operate the aircraft over a given range. Moreover, hydrogen fuel has a relatively low boiling point and must be stored at cryogenic temperatures to be maintained in the liquid phase. A storage tank holding liquid hydrogen cryogenically requires more space overall and has an increased weight as compared with a storage tank holding a comparable volume of Jet-A fuel. These space and weight requirements can be a particular disadvantage when using hydrogen fuel for applications such as aircraft, where space and weight are at a premium. The present disclosure discusses a hydrogen storage tank that may be used as a fuel tank for storing liquid hydrogen (diatomic hydrogen) onboard an aircraft for use as a fuel to power the aircraft or components thereof.

Composite materials may be used to form the hydrogen storage tank discussed herein, which may be referred to as a composite hydrogen storage tank. The composite hydrogen storage tank discussed herein includes stiffeners within to help provide structural support for the composite hydrogen storage tank. These stiffeners are attached using integrated, seamless brackets that minimize the opportunity for hydrogen to escape. Methods of forming these brackets and the composite hydrogen storage tank are discussed herein.

Additionally, the composite hydrogen storage tank may include buffers to slow the flow of liquid hydrogen (sloshing) within the composite hydrogen storage tank. Aircraft maneuver during a flight cycle, including changes in pitch and roll. Such movements can cause the liquid hydrogen within the fuel tank to move within the tank and unimpeded flow may result in damage to the internal surfaces of the composite hydrogen storage tank. The buffers discussed herein are positioned to slow the flow of the liquid hydrogen within the composite hydrogen storage tank and to prevent the sloshing that may result in damage to the composite hydrogen storage tank. Various different 3D printed flow structures are discussed herein. These buffers may be formed integrally with the stiffeners.

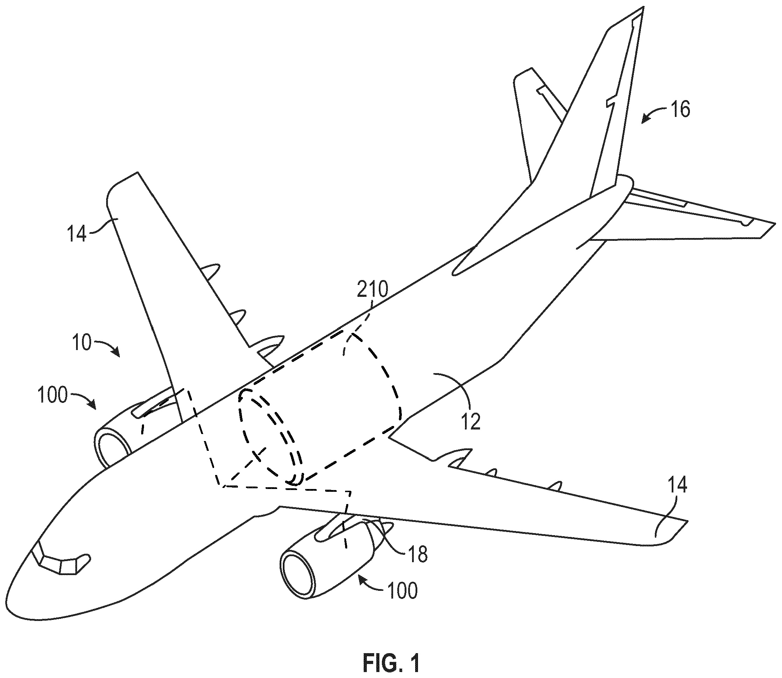

FIG. 1 is a schematic view of an aircraft 10 that may implement the composite hydrogen storage tank. The aircraft 10 includes a fuselage 12, a pair of wings 14 attached to the fuselage 12, and an empennage 16. The aircraft 10 also includes a propulsion system that produces a propulsive thrust required to propel the aircraft 10 in flight, during taxiing operations, and the like. The propulsion system for the aircraft 10 shown in FIG. 1 includes a pair of turbine engines 100. As depicted in FIG. 1, each turbine engine 100 is attached to one of the wings 14 by a pylon 18 in an under-wing configuration. Although the turbine engines 100 are shown attached to the wing 14 in an under-wing configuration in FIG. 1, the turbine engine 100 may have alternative configurations and be coupled to other portions of the aircraft 10. For example, the turbine engine 100 may additionally or alternatively include one or more aspects coupled to other parts of the aircraft 10, such as, for example, the empennage 16 and the fuselage 12.

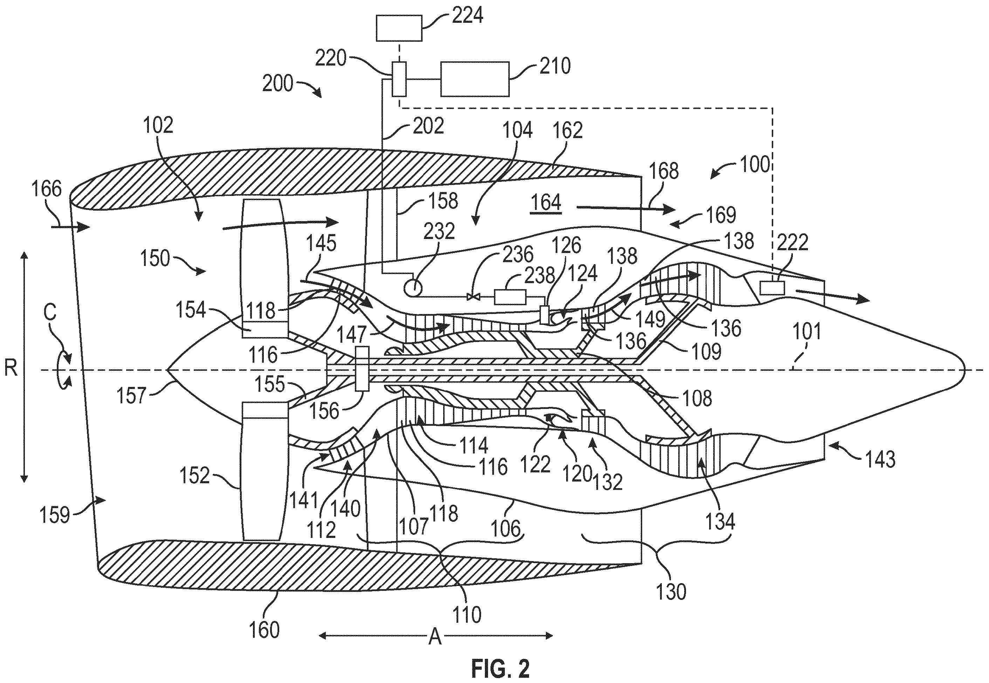

As will be described in more detail below with reference to FIG. 2, the turbine engines 100 shown in FIG. 1 are turbine engines that are each capable of selectively generating a propulsive thrust for the aircraft 10. The amount of propulsive thrust may be controlled at least in part based on a volume of fuel provided to the turbine engines 100 via a fuel system 200 (see FIG. 2). As discussed herein, the fuel is a hydrogen fuel that is stored in a fuel tank 210 of the fuel system 200. At least a portion of the fuel tank 210 is located in the fuselage 12 and, as shown in FIG. 1, entirely within the fuselage 12. The fuel tank 210, however, may be located at other suitable locations in the fuselage 12 or the wing 14, such as with a portion of the fuel tank 210 in the fuselage 12 and a portion of the fuel tank 210 in the wing 14. Alternatively, the fuel tank 210 may also be located entirely within the wing 14. A single fuel tank 210 is depicted in FIG. 1, but a plurality of fuel tanks 210 may be used.

Although the aircraft 10 shown in FIG. 1 is an airplane, the embodiments described herein may also be applicable to other aircraft 10, including, for example, helicopters and unmanned aerial vehicles (UAV). The aircraft discussed herein are fixed-wing aircraft or rotor aircraft that generate lift by aerodynamic forces acting on, for example, a fixed wing (e.g., the wing 14) or a rotary wing (e.g., a rotor of a helicopter), and are heavier-than-air aircraft, as opposed to lighter-than-air aircraft (such as a dirigible). In addition, the embodiments described herein may also be applicable to other applications where hydrogen is used as a fuel. The engines described herein are turbine engines, but the embodiments described herein also may be applicable to other engines. Further, the engine, specifically, the gas turbine engine, is an example of a power generator using hydrogen as a fuel, but hydrogen may be used as a fuel for other power generators, including, for example, fuel cells (hydrogen fuel cells). Such power generators may be used in various applications including stationary power-generation systems (including both turbines and hydrogen fuel cells) and other vehicles beyond the aircraft 10 explicitly described herein, such as boats, ships, cars, trucks, and the like.

FIG. 2 is a schematic, cross-sectional view of one of the turbine engines 100 of the aircraft 10 shown in FIG. 1. The turbine engine 100 has an axial direction A (extending parallel to a longitudinal centerline axis 101, shown for reference in FIG. 2), a radial direction R, and a circumferential direction. The circumferential direction C extends in a direction rotating about the longitudinal centerline axis 101 (the axial direction A). In FIG. 2, the turbine engine 100 depicted is a high bypass turbofan engine, including a fan section 102 and a turbo-engine 104 disposed downstream from the fan section 102.

The turbo-engine 104 depicted in FIG. 2 includes, in serial flow relationship, a compressor section 110, a combustion section 120, and a turbine section 130. The turbo-engine 104 is substantially enclosed within an outer casing 106 (also referred to as a housing or a nacelle) that is substantially tubular and defines a core inlet 141. In this embodiment, the core inlet 141 is annular. As schematically shown in FIG. 2, the compressor section 110 includes a booster or a low-pressure (LP) compressor 112 followed downstream by a high-pressure (HP) compressor 114. The combustion section 120 is downstream of the compressor section 110. The turbine section 130 is downstream of the combustion section 120 and includes a high-pressure (HP) turbine 132 followed downstream by a low-pressure (LP) turbine 134. The turbo-engine 104 further includes a core air exhaust nozzle 143 (also referred to as a jet exhaust nozzle) that is downstream of the turbine section 130. The compressor section 110, the combustion section 120, and the turbine section 130 together define, at least in part, a core air flow path 140 extending from the core inlet 141 to the core air exhaust nozzle 143, and through which core air 145 flows. As will be discussed in more detail below, the turbo-engine 104 includes a high-pressure (HP) shaft 108 or a HP spool, and a low-pressure (LP) shaft 109. The HP shaft 108 drivingly connects the HP turbine 132 to the HP compressor 114. The HP turbine 132 and the HP compressor 114 rotate in unison through the HP shaft 108. The LP shaft 109 drivingly connects the LP turbine 134 to the LP compressor 112. The LP turbine 134 and the LP compressor 112 rotate in unison through the LP shaft 109.

Each of the LP compressor 112 and the HP compressor 114 can include a plurality of compressor stages. In each stage, a plurality of compressor blades 116 rotates relative to a corresponding plurality of static compressor vanes 118 (also called nozzles) to compress or to pressurize the core air 145 passing through the stage. In a single compressor stage, the plurality of compressor blades 116 can be provided in a ring, extending radially outwardly relative to the longitudinal centerline axis 101 from a blade platform to a blade tip (e.g., extend in the radial direction R). The compressor blades 116 can be a part of a compressor rotor that includes a disk and each compressor blade 116 of the plurality of compressor blades 116 extends radially from the disk. Other configurations of the compressor rotor can be used, including, for example, blisks where the disk and the compressor blades 116 are integrally formed with each other to be a single piece. The corresponding static compressor vanes 118 are located upstream of and adjacent to the rotating compressor blades 116. The compressor vanes 118 for a stage of the compressor can be mounted to a core casing 107 in a circumferential arrangement. The core casing 107 can define, at least in part, the core air flow path 140. Each compressor stage can be used to sequentially compress the core air 145 flowing through the core air flow path 140, generating compressed air 147. Any suitable number of compressor blades 116, compressor vanes 118, and compressor stages can be used.

Each of the HP turbine 132 and the LP turbine 134 also can include a plurality of turbine stages. In each stage, a plurality of turbine blades 136 rotates relative to a corresponding plurality of static turbine vanes 138 (also called a nozzle) to extract energy from combustion gases 149 passing through the stage. The turbine blades 136 can be a part of a turbine rotor. Any suitable configuration for a turbine rotor can be used, including, for example, a disk with the plurality of turbine blades 136 extending from the disk. The corresponding static turbine vanes 138 are located upstream of and adjacent to the rotating turbine blades 136. The turbine vanes 138 for a stage of the turbine can be mounted to the core casing 107 in a circumferential arrangement.

In the combustion section 120, fuel, received from the fuel system 200, is injected into a combustion chamber 124 of a combustor 122 by fuel nozzles 126. The fuel is mixed with the compressed air 147 from the compressor section 110 to form a fuel and air mixture, and combusted, generating combustion products (i.e., combustion gases 149). As will be discussed further below, adjusting a fuel metering unit 236 of the fuel system changes the volume of fuel provided to the combustion chamber 124 and, thus, changes the amount of propulsive thrust produced by the turbine engine 100 to propel the aircraft. The combustion gases 149 are discharged from the combustion chamber 124. These combustion gases may be directed into the turbine blades 136 of the HP turbine 132 and, then, the turbine blades 136 of the LP turbine 134, and the combustion gases 149 drive (rotate) the turbine blades 136 of the HP turbine 132 and the LP turbine 134. Any suitable number of turbine blades 136, turbine vanes 138, and turbine stages may be used. After flowing through the turbine section 130, the combustion gases 149 are exhausted from the turbine engine 100 through the core air exhaust nozzle 143 to provide propulsive thrust.

The fuel system 200 is configured to store the hydrogen fuel in the fuel tank 210 and to deliver the hydrogen fuel the turbine engine 100 and, more specifically, the fuel nozzles 126 via a fuel delivery assembly 202. The fuel delivery assembly 202 includes tubes, pipes, conduits, and the like, to fluidly connect the various components of the fuel system 200 to each other. The fuel delivery assembly 202 provides a flow path of the hydrogen fuel from the fuel tank 210 downstream to the turbine engine 100 and, more specifically, the fuel nozzles 126.

The fuel tank 210 may be configured to hold the hydrogen fuel at least partially within the liquid phase and may be configured to provide hydrogen fuel to the fuel delivery assembly 202 substantially completely in the liquid phase, such as completely in the liquid phase. For example, the fuel tank 210 may have a fixed volume and contain a volume of the hydrogen fuel in the liquid phase. As the fuel tank 210 provides hydrogen fuel to the fuel delivery assembly 202 substantially completely in the liquid phase, the volume of the liquid hydrogen fuel in the fuel tank 210 decreases and the remaining volume in the fuel tank 210 is made up by, for example, hydrogen, such as diatomic hydrogen, substantially completely in the gaseous phase (gaseous hydrogen).

To store the fuel including diatomic hydrogen substantially completely in the liquid phase, the fuel including diatomic hydrogen may be stored in the fuel tank 210 at very low (cryogenic) temperatures. For example, the fuel including diatomic hydrogen may be stored in the fuel tank 210 at about negative two hundred fifty-three degrees Celsius or less at atmospheric pressure, or at other temperatures and pressures to maintain the fuel including diatomic hydrogen substantially completely in the liquid phase. As discussed in more detail below, the fuel tank 210 discussed herein is a composite component formed, at least in part, by composite material. Various suitable means may be used with the composite material to minimize heat transfer and to maintain the hydrogen fuel in the liquid phase at the cryogenic temperatures. These means include, for example insulation including, for example, vacuum jacketing. As noted above, the liquid hydrogen fuel, including diatomic hydrogen, may be supplied from the fuel tank 210 to the fuel delivery assembly 202, which includes tubes, pipes, conduits, and the like. The fuel tank 210 may be fluidly connected to the fuel delivery assembly 202 via one or more ports, as will be discussed further below.

The hydrogen fuel is delivered to the engine by the fuel delivery assembly 202 in the gaseous phase, the supercritical phase, or both (at least one of the gaseous phase or the supercritical phase). The fuel system 200 thus includes a vaporizer 220 in fluid communication with the fuel delivery assembly 202 to heat the liquid hydrogen fuel flowing through the fuel delivery assembly 202. The vaporizer 220 is positioned in the flow path of the hydrogen fuel between the fuel tank 210 and the turbine engine 100. The vaporizer 220 may be positioned at least partially within the fuselage 12 (FIG. 1) or the wing 14 (FIG. 1), such as at least partially within the wing 14. The vaporizer 220 may, however, be positioned at other suitable locations in the flow path of the hydrogen between the fuel tank 210 and the turbine engine 100. For example, the vaporizer 220 may be positioned external to the fuselage 12 and the wing 14, and positioned at least partially within the pylon 18 (FIG. 1) or the turbine engine 100. When positioned in the turbine engine 100, the vaporizer may be located in the nacelle 160, for example. Although only one vaporizer 220 is shown in FIG. 2, the fuel system 200 may include multiple vaporizers 220. For example, when a vaporizer 220 is positioned in the turbine engine 100 or in the pylon 18 and functions as a primary vaporizer configured to operate once the turbine engine 100 is in a thermally stable condition, another vaporizer 220 is positioned upstream of the primary vaporizer and proximate to the fuel tank 210 and functions as a primer vaporizer during start-up (or prior to start-up) of the turbine engine 100.

The vaporizer 220 is in thermal communication with at least one heat source. As depicted in FIG. 2, the vaporizer 220 is in thermal communication with a primary heat source 222 and an auxiliary heat source 224. In this embodiment, primary heat source 222 is waste heat from the turbine engine 100. As depicted in FIG. 2, the primary heat source 222 is shown schematically as a heat exchanger positioned in the core air flow path 140 to extract heat from the combustion gases 149. The vaporizer 220 may be thermally connected to other heat sources of the turbine engine 100 including, for example, at least one of a main lubrication system, a compressor cooling air (CCA) system, an active thermal clearance control (ATCC) system, or a generator lubrication system. In such a manner, the vaporizer 220 is configured to operate by drawing heat from the primary heat source 222 once the turbine engine 100 is capable of providing enough heat, via the primary heat source 222, to the vaporizer 220, in order to facilitate operation of the vaporizer 220.

The vaporizer 220 may be heated by any suitable heat source, and, in this embodiment, for example, the auxiliary heat source 224 is a heat source external to the turbine engine 100. The auxiliary heat source 224 may include, for example, an electrical power source, a catalytic heater or burner, and/or a bleed airflow from an auxiliary power unit. The auxiliary heat source 224 may be integral to the vaporizer 220, such as when the vaporizer 220 includes one or more electrical resistance heaters, or the like, that are powered by the electrical power source. In this configuration, the auxiliary heat source 224 may provide heat for the vaporizer 220 independent of whether or not the turbine engine 100 is running and can be used, for example, during start-up (or prior to start-up) of the turbine engine 100.

As noted, the vaporizer 220 is in communication with the flow of the hydrogen fuel through the fuel delivery assembly 202. The vaporizer 220 is configured to draw heat from at least one of the primary heat source 222 or the auxiliary heat source 224 to heat the flow of hydrogen fuel from a substantially completely liquid phase to a substantially completely gaseous phase or to a substantially completely supercritical phase.

The fuel system 200 also includes a high-pressure pump 232 in fluid communication with the fuel delivery assembly 202 to direct the flow of the hydrogen fuel through the fuel delivery assembly 202 to the turbine engine 100. The high-pressure pump 232 may generally be the primary source of pressure rise in the fuel delivery assembly 202 between the fuel tank 210 and the turbine engine 100. The high-pressure pump 232 may be configured to increase a pressure in the fuel delivery assembly 202 to a pressure greater than a pressure within the combustion chamber 124 of the combustor 122 of the turbine engine 100, and to overcome any pressure drop of the components placed downstream of the high-pressure pump 232.

The high-pressure pump 232 is positioned within the flow of hydrogen fuel in the fuel delivery assembly 202 at a location downstream of the vaporizer 220. In this embodiment, the high-pressure pump 232 is positioned external to the fuselage 12 (FIG. 1) and the wing 14 (FIG. 1) and is positioned at least partially within the pylon 18 (FIG. 1), or at least partially within the turbine engine 100. More specifically, the high-pressure pump 232 is positioned within the turbine engine 100. With the high-pressure pump 232 located in such a position, the high-pressure pump 232 may be any suitable pump configured to receive the flow of hydrogen fuel in a substantially completely gaseous phase or a supercritical phase. In other embodiments, however, the high-pressure pump 232 may be positioned at other suitable locations, including other positions within the flow path of the hydrogen fuel. For example, the high-pressure pump 232 may be located upstream of the vaporizer 220 and may be configured to receive the flow of hydrogen fuel through the fuel delivery assembly 202 in a substantially completely liquid phase.

The fuel system 200 also includes a fuel metering unit 236 in fluid communication with the fuel delivery assembly 202. Any suitable fuel metering unit 236 may be used including, for example, a fuel metering valve placed in fluid communication with the fuel delivery assembly 202. The fuel delivery assembly 202 is configured to provide the fuel to the fuel metering unit 236, and the fuel metering unit 236 is configured to receive hydrogen fuel from a fuel source such as the fuel tank 210. The fuel metering unit 236 is further configured to provide the flow of the hydrogen fuel to the combustor 122. The fuel metering unit 236 is configured to provide a desired volume of the hydrogen fuel, at, for example, a desired flow rate, to a fuel manifold 238 of the turbine engine 100. The fuel manifold 238 then distributes (provides) the hydrogen fuel received to the fuel nozzles 126 (a plurality of fuel nozzles). Adjusting the fuel metering unit 236 changes the volume of fuel (and diluent) provided to the combustion chamber 124 of the combustor 122 and, thus, changes the amount of propulsive thrust produced by the turbine engine 100 to propel the aircraft 10.

The turbine engine 100 and, more specifically, the turbo-engine 104 further includes one or more drive shafts. As noted above, the turbo-engine 104 includes the high-pressure (HP) shaft 108 drivingly connecting the HP turbine 132 to the HP compressor 114, and the low-pressure (LP) shaft 109 drivingly connecting the LP turbine 134 to the LP compressor 112. More specifically, the turbine rotors of the HP turbine 132 are connected to the HP shaft 108, and the compressor rotors of the HP compressor 114 are connected to the HP shaft 108. The combustion gases 149 are routed into the HP turbine 132 and expanded through the HP turbine 132 where a portion of thermal energy or kinetic energy from the combustion gases 149 is extracted via the one or more stages of the turbine blades 136 and the turbine vanes 138 of the HP turbine 132. This causes the HP shaft 108 to rotate, which supports operation of the HP compressor 114 (self-sustaining cycle) and rotating the compressor rotors and, thus, the compressor blades 116 of the HP compressor 114 via the HP shaft 108. In this way, the combustion gases 149 do work on the HP turbine 132. The combustion gases 149 are then routed into the LP turbine 134 and expanded through the LP turbine 134. Here, a second portion of the thermal energy or the kinetic energy is extracted from the combustion gases 149 via one or more stages of the turbine blades 136 and the turbine vanes 138 of the LP turbine 134. This causes the LP shaft 109 to rotate, which supports operation of the LP compressor 112 (self-sustaining cycle), and rotation of the compressor rotors and, thus, the compressor blades 116 of the LP compressor 112 via the LP shaft 109. In this way, the combustion gases 149 do work on the LP turbine 134. The HP shaft 108 and the LP shaft 109 are disposed coaxially about the longitudinal centerline axis 101. The HP shaft 108 has a diameter greater than that of the LP shaft 109, and the HP shaft 108 is located radially outward of the LP shaft 109. The HP shaft 108 and the LP shaft 109 are rotatable about the longitudinal centerline axis 101 and, as discussed above, are coupled to rotatable elements such as the compressor rotors and the turbine rotors.

The fan section 102 shown in FIG. 1 includes a fan 150 having a plurality of fan blades 152 coupled to a disk 154. The fan blades 152 and the disk 154 are rotatable, together, about the longitudinal centerline (axis) 101 by a fan shaft 155 that is powered by the LP shaft 109 across a power gearbox, also referred to as a gearbox assembly 156. In this way, the fan 150 is drivingly coupled to, and powered by, the turbo-engine 104, and the turbine engine 100 is an indirect drive engine. The gearbox assembly 156 is shown schematically in FIG. 1. The gearbox assembly 156 is a reduction gearbox assembly for adjusting the rotational speed of the fan shaft 155 and, thus, the fan 150 relative to the LP shaft 109 when power is transferred from the LP shaft 109 to the fan shaft 155. The disk 154 is covered by a fan hub 157 aerodynamically contoured to promote an airflow through the plurality of fan blades 152. Further, the nacelle 160 circumferentially surrounds the fan 150, and in the depicted embodiment, at least a portion of the turbo-engine 104. The nacelle 160 may also be referred to as an annular fan casing or an outer nacelle. The nacelle 160 is supported relative to the turbo-engine 104 and, more specifically, the outer casing 106 by a plurality of outlet guide vanes 158 that are circumferentially spaced about the nacelle 160 and the turbo-engine 104. A downstream section 162 of the nacelle 160 extends over an outer portion of the turbo-engine 104 and, more specifically, the outer casing 106 so as to define a bypass airflow passage 164 therebetween.

During operation of the turbine engine 100, a volume of air 166 enters the turbine engine 100 through an inlet of the nacelle 160 and/or the fan section 102 (referred to herein as an engine inlet 159). As the volume of air 166 passes across the fan blades 152, a first portion of air (bypass air 168) is directed or routed into the bypass airflow passage 164, and a second portion of air (core air 145) is directed or is routed into an upstream section of the core air flow path 140, or, more specifically, into the core inlet 141. The ratio between the bypass air 168 and the core air 145 is commonly known as a bypass ratio. Simultaneously with the flow of the core air 145 through the core air flow path 140 (as discussed above), the bypass air 168 is routed through the bypass airflow passage 164 before being exhausted from a bypass air discharge nozzle 169 of the turbine engine 100, also providing propulsive thrust. The bypass air discharge nozzle 169 and the core air exhaust nozzle 143 are air exhaust nozzles of the turbine engine 100.

The turbine engine 100 shown in FIG. 1 and discussed herein (turbofan engine) is provided by way of example only. In other embodiments, any other suitable engine may be utilized with aspects of the present disclosure. For example, in other embodiments, the engine may be any other suitable turbine engine, such as a turboshaft engine, a turboprop engine, a turbojet engine, an unducted single fan engine, and the like. In such a manner, in other embodiments, the turbine engine may have other suitable configurations, such as other suitable numbers or arrangements of shafts, compressors, turbines, fans, etc. Further, although the turbine engine 100 is shown as an indirect drive, fixed-pitch turbofan engine, in other configurations, the turbine engine 100 may be a direct drive engine, which does not have a power gearbox (e.g., the gearbox assembly 156) and, in which, the LP shaft 109 is directly connected to the fan 150. The fan speed is the same as the LP shaft speed for a direct drive engine. In other configurations, the turbine engine 100 may be a variable pitch turbine engine (i.e., including a fan 150 having a plurality of fan blades 152 rotatable about their respective pitch axes), etc. Further, still, in alternative embodiments, aspects of the present disclosure may be incorporated into, or otherwise utilized with, any other type of engine, such as reciprocating engines.

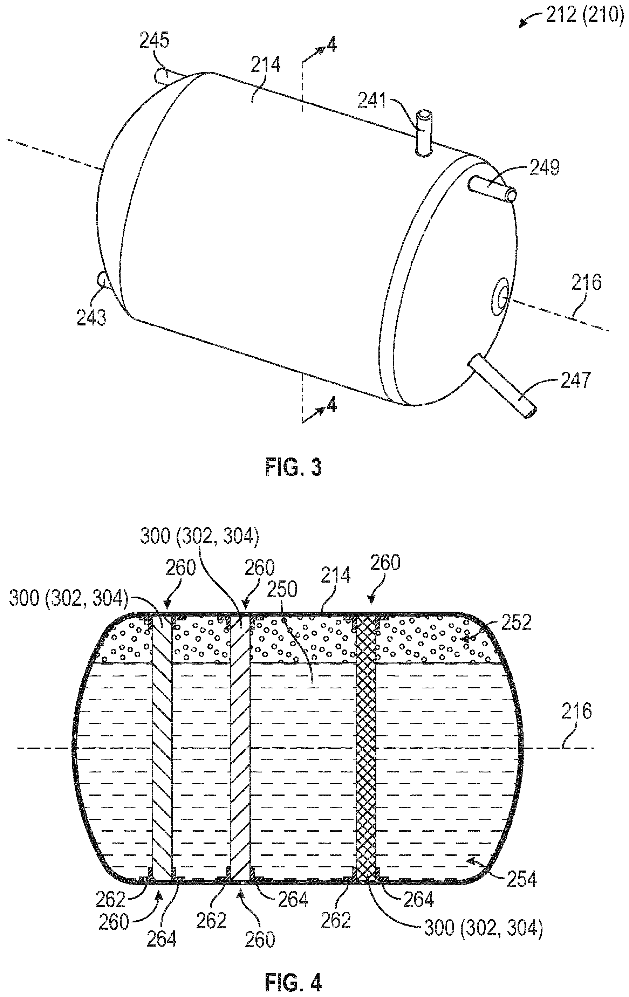

FIG. 3 is schematic view of the fuel tank 210. As discussed above, the fuel tank 210 may be a composite tank for storing liquid hydrogen, which is referred to herein as a composite hydrogen storage tank 212. The composite hydrogen storage tank 212 shown in FIG. 3 (and also the fuel tank 210 shown in FIG. 1) is depicted as a circular, cylindrical tank, but other geometries may be used. In particular, the composite materials used to form the composite hydrogen storage tank 212 may allow for irregularly shaped fuel tanks 210 to be formed. Such irregular shaped fuel tanks 210 may be particularly advantageous for vehicles, such as cars, trucks, and the aircraft 10 depicted in FIG. 1, where space is at a premium and forming irregular shapes may allow for additional positioning of the fuel tank 210, such as in the wings 14 (FIG. 1) for example. In The composite hydrogen storage tank 212 includes at least one vessel wall 214 formed from the composite materials discussed herein and, more specifically, a plurality of reinforcing fiber tows embedded in a matrix, such as PMC materials discussed in more detail above. The composite hydrogen storage tank 212 depicted in FIG. 3 includes a longitudinal axis 216 defining an axial direction of the composite hydrogen storage tank 212.

FIG. 4 is a cross sectional view of the composite hydrogen storage tank 212 taken along line 4-4 in FIG. 3. An inner vessel wall, such as the vessel wall 214, defines a chamber 250 in which the hydrogen fuel, in the liquid phase (i.e., liquid hydrogen), is stored. The chamber 250 includes an upper portion 252 and a lower portion 254. The gaseous hydrogen will collect in the upper portion 252 of the chamber 250 and the liquid hydrogen will be located in the lower portion 254 of the chamber 250. As the fuel tank 210 provides hydrogen fuel, the volume of the liquid hydrogen fuel in the fuel tank 210 decreases, with the remaining volume in the fuel tank made up of gaseous hydrogen.

Referring back to FIG. 3, the composite hydrogen storage tank 212 includes a plurality of fluid ports. Each of these fluid ports fluidly connects the chamber 250 to outside of the fuel tank 210 and penetrates vessel wall 214. Each of the fluid ports may connect to a fluid line, such as a pipe, a tube, a conduit, etc., suitable for the application to convey the fluid to or from the fuel tank 210 and, more specifically, the chamber 250 of the fuel tank 210. One fluid port is a gaseous hydrogen extraction port 241. As noted above, gaseous hydrogen may collect in the upper portion 252 of the chamber 250. The gaseous hydrogen extraction port 241 is fluidly connected to the upper portion 252 of the chamber 250, and may extend radially outward from the fuel tank 210. The gaseous hydrogen extraction port 241 may be used to remove (extract) the gaseous hydrogen from the chamber 250, such as by venting the chamber 250 to the atmosphere. The gaseous hydrogen extraction port 241 may be used to regulate the pressure in the chamber 250. A suitable control valve, such as a pressure control valve, may be located in the gaseous hydrogen extraction line to regulate the pressure and to control venting of the chamber 250.

The fuel tank 210 is filled using at least one liquid hydrogen fill port. In this embodiment, the fuel tank 210 includes two liquid hydrogen fill ports, a lower liquid hydrogen fill port 243 and an upper liquid hydrogen fill port 245. Each of the lower liquid hydrogen fill port 243 and the upper liquid hydrogen fill port 245 is connected to a liquid hydrogen fill line (not shown) that may extend from the chamber 250 to a coupling located on the exterior of the aircraft 10, such as on the exterior of the fuselage 12. The lower liquid hydrogen fill port 243 and the upper liquid hydrogen fill port 245 may be connected to separate hydrogen fill lines or to a common hydrogen file line. A valve may be incorporated into the coupling or placed between the coupling and the chamber 250. A liquid hydrogen source is coupled to the coupling and the valve opened to fill the fuel tank 210 with liquid hydrogen. The lower liquid hydrogen fill port 243 is fluidly connected to the chamber 250 at the lower portion 254 and may be used to fill the fuel tank 210 from the bottom (bottom fill). The upper liquid hydrogen fill port 245 is fluidly connected to the chamber 250 at the upper portion 252 and may be used to fill the fuel tank 210 from the top (top fill). In some embodiments, one of the lower liquid hydrogen fill port 243 or the upper liquid hydrogen fill port 245 may be used to fill the fuel tank 210. In other embodiments, both the lower liquid hydrogen fill port 243 and the upper liquid hydrogen fill port 245 may be used simultaneously to fill the fuel tank 210 with a favorable hydrogen quality, such as desired temperatures, pressures and degrees of saturation for the hydrogen in the fuel tank 210.

A fuel extraction port 247 is fluidly coupled to the chamber 250 and the fuel delivery assembly 202 (FIG. 1) to provide hydrogen fuel to the fuel delivery assembly 202. The fuel tank 210, more specifically, the chamber 250 (FIG. 4), is fluidly coupled to the fuel delivery assembly 202 by the fuel extraction port 247. As the fuel tank 210 provides hydrogen fuel, the volume of the liquid hydrogen fuel in the fuel tank 210 decreases, and the fuel extraction port 247 is fluidly coupled to the chamber 250 at the lower portion 254 of the chamber 250. Gaseous hydrogen in a fuel line connected to the fuel extraction port 247 may be separated from the liquid hydrogen fuel and the gaseous hydrogen may recirculated back to the fuel tank 210, and, more specifically, the chamber, by a hydrogen vapor return line fluidly connected to a hydrogen vapor return port 249. The hydrogen vapor return port 249 may be fluidly connected to the chamber 250 at the upper portion 252 of the chamber 250 to return the gaseous hydrogen to the vapor space within the chamber 250.

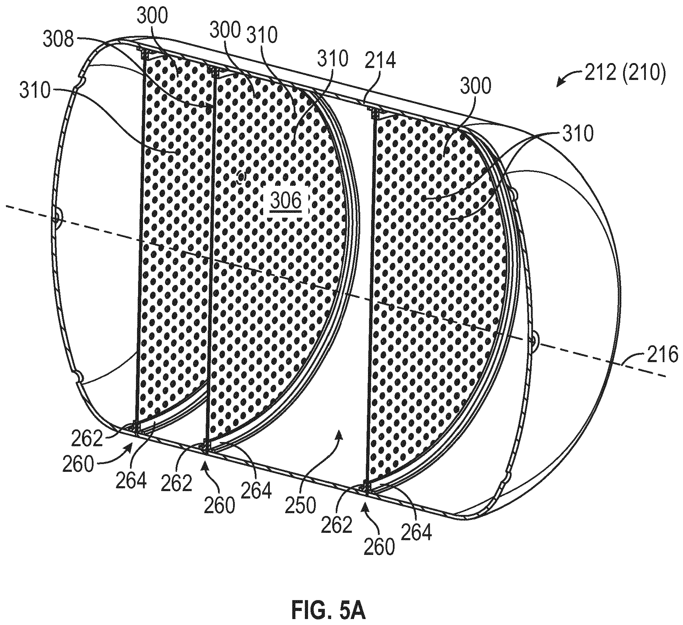

Referring back to FIG. 4, the composite hydrogen storage tank 212 includes a plurality of buffers 302, a plurality of stiffeners 304, or both located in the chamber 250. As depicted in FIG. 4 (and FIG 5A), each buffer 302 also is a stiffener 304, and this integrally formed buffer 302 and stiffener 304 is referred to herein, for clarity, as a structural buffer 300. Each structural buffer 300 may be oriented in a direction transverse to the longitudinal axis 216 of the composite hydrogen storage tank 212, and, more specifically, perpendicular to the longitudinal axis 216 of the composite hydrogen storage tank 212. The structural buffer 300 may thus extend in a radial direction of the composite hydrogen storage tank 212.

FIG. 5A also is a cross-sectional view of the composite hydrogen storage tank shown in FIG. 3 taken along line 4-4 in FIG. 3, but FIG. 5A illustrates the composite hydrogen storage tank 212 from a different viewpoint than illustrated in FIG. 4. The structural buffer 300 depicted in FIG. 5A is a plate extending from one side of the composite hydrogen storage tank 212 (a lower side or a first side) to another side of the composite hydrogen storage tank 212 (an upper side or a second side). The second side (e.g., the upper side) can be opposite the first side (e.g., the lower side) with the chamber 250 therebetween. In this way, the structural buffer 300 can be connected to the vessel wall 214 to provide a load path from one side of the vessel wall 214 to the other, stiffening the composite hydrogen storage tank 212 in a direction transverse to the longitudinal axis 216 (e.g., the radial direction of the composite hydrogen storage tank 212).

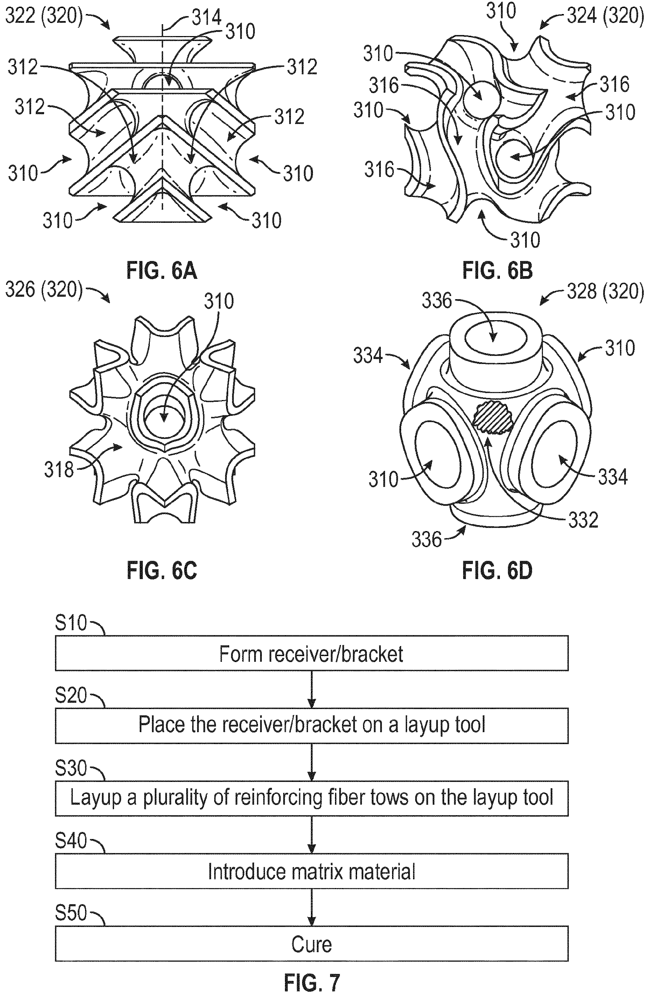

The structural buffer 300 is depicted in FIG. 5A as plates extending over the full cross-sectional area of the chamber 250. The structural buffer 300 includes a plurality of flow passages 310 that fluidly connects a first side 306 (a first face) of the structural buffer 300 with a second side 308 (a second face) of the structural buffer 300. The flow passages 310 allow the liquid hydrogen to flow therethrough. The structural buffer 300 can be made with different materials, such as composite materials as discussed herein, or metal-based materials, like aluminum and aluminum alloys. Other porous materials. Structural buffer 300 can have a honeycomb structure, a lattice structure, other structures. These structures and flow passages 310 can be part of a flow structure 320 (FIGS. 6A to 6D) that is a repeating pattern forming the structural buffer 300. As discussed below, these various structures can be additively manufactured.

The flow passages 310 and flow structure 320 is shaped and designed to slow and to restrict the flow of liquid hydrogen through the structural buffer 300. The structural buffers 300 are positioned within the chamber 250 and configured to restrict the flow of the liquid hydrogen in a desired direction. As depicted in FIG. 5A, the structural buffers 300 are positioned to restrict the flow of the liquid hydrogen in a longitudinal direction of the composite hydrogen storage tank 212, which, in the orientation of the fuel tank 210 shown in FIG. 1, may be the forward direction and the aft direction of the aircraft 10.

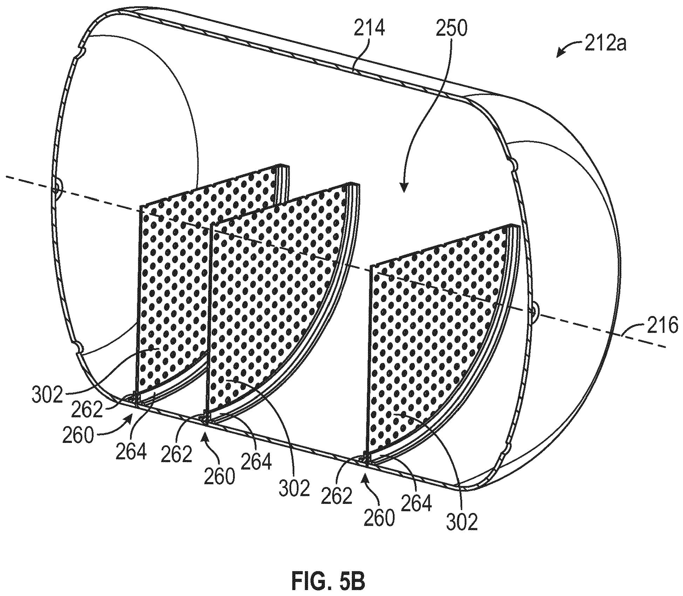

FIG. 5B is a cross-sectional view of a composite hydrogen storage tank 212a similar to that shown in FIG. 5A, but showing a plurality of buffers 302 instead of the plurality of structural buffers 300. The composite hydrogen storage tank 212a of FIG. 5B is similar to the composite hydrogen storage tank 212 discussed above. The same reference numerals are used for the same or similar components and a detailed discussion of these components is omitted here. The buffers 302, whether combined with the stiffener 304 as the structural buffer 300 or non-structural, may have geometries other than those depicted in FIG. 5A. As depicted in FIG. 5B, for example, the buffer 302 is a plate, but only extends across a portion of the diameter of the composite hydrogen storage tank 212 (at least in one direction). The buffer 302 is a plate that is positioned to extend over only a portion of the cross-sectional area of the chamber 250. The buffer 302 may be strategically placed within the composite hydrogen storage tank 212 to suppress the flow of liquid hydrogen for hydrogen levels and conditions that may cause damage to the vessel wall 214. For example, when the composite hydrogen storage tank 212 is full or nearly full, such sloshing protection may not be needed and the buffer 302, as shown in FIG. 5B, is located in the lower portion 254 of the chamber 250 to restrict the flow of liquid hydrogen during partially filled conditions. In such a case, the buffer 302 is not located in the upper portion 252 of the chamber 250. The upper portion 252 of the chamber 250 can be free from the buffer 302.

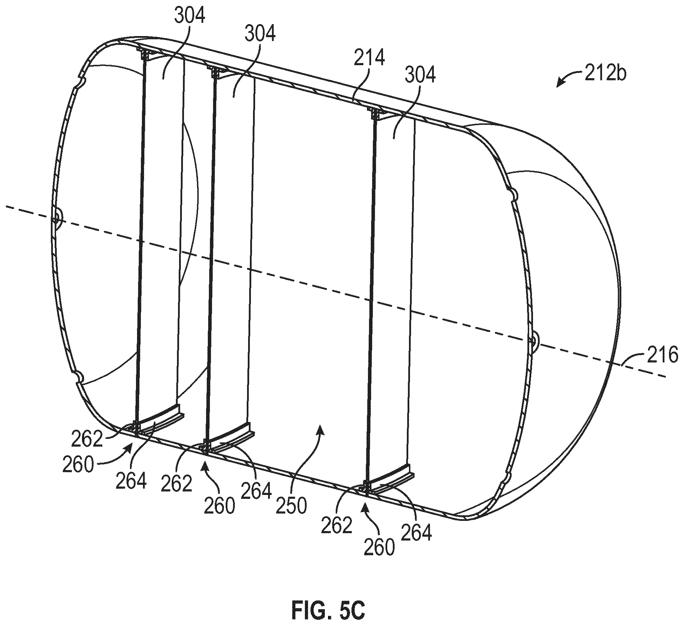

FIG. 5C a is cross-sectional view of a composite hydrogen storage tank 212b similar to that shown in FIG. 5A, but showing a plurality of stiffeners 304 instead of the plurality of structural buffers 300. The composite hydrogen storage tank 212b of FIG. 5C is similar to the composite hydrogen storage tank 212 discussed above. The same reference numerals are used for the same or similar components and a detailed discussion of these components is omitted here. In some applications, the buffers 302 may not be needed, but additional rigidity and stiffness may be desirable. The composite hydrogen storage tank 212b may include a plurality of stiffeners 304 that extend from one side of the composite hydrogen storage tank 212b, and, more specifically, one side of the vessel wall 214 to an opposite side of the composite hydrogen storage tank 212b and vessel wall 214, respectively, providing a structural support and a load path as discussed above. The composite materials discussed herein to form the vessel wall 214 of the fuel tank 210 may be less rigid than other materials, such as metals. The stiffeners 304 discussed herein, whether combined with the buffer 302 as the structural buffer 300 or not, may be used to provide strength to maintain the shape of the vessel wall 214. The flow passages 310 (FIG. 5A) may be omitted from the stiffener 304, when the buffering function discussed above is not needed or desired. The stiffener 304 may have different shapes. The stiffener 304 depicted in FIG. 5C is a stay or brace having a bar shape. More specifically, the bar shape can have a rectangular cross-section, but other shapes can be used including, for example, circular bar shapes (e.g., rods) or even cruciform shapes to provide strength in multiple directions. The stiffener 304, in the form of the stay or brace, can be positioned to extend over only a portion of the cross-sectional area of the chamber 250.

FIGS. 6A to 6D are schematic views of different flow structures 320 for that may be used in the buffers of the composite hydrogen storage tank 212 shown in FIG. 5A. The flow structures 320 disclosed in FIGS. 6A to 6D are similar and the same reference numerals will be used to refer to like or similar components. Such components and features described in one of FIGS. 6A to 6D apply to the others unless otherwise indicated. Reference numeral 320 is used generically to refer to any one of the flow structures shown in FIGS. 6A to 6D. Each of the flow structures 320 includes a plurality of flow passages 310. The flow passages 310 are through-hole passages or openings that allow the liquid hydrogen to flow therethrough. These flow passages 310 may be microchannels. As used herein, a microchannel is a flow passage 310 or other channel having a hydraulic diameter from 0.2 mm to 2 mm. As depicted in FIGS. 6A to 6D, these flow passages 310 may be circular having a diameter from 0.2 mm to 2 mm. The reduced diameter of each flow passages 310 slows the flow of liquid hydrogen therethrough.

Each of the flow structures 320 depicted in FIGS. 6A to 6D is one unit and may be repeated as a repeating pattern to form the plate (or other structure) of the structural buffer 300 (FIG. 4) or buffer 302 (FIG. 4). In view of the complexity of these patterns and the sizes of the flow passages 310, the structural buffer 300 or buffer 302 may be formed by additive manufacturing processes or 3D printing processes. The structural buffer 300 or buffer 302 may be formed from plastic materials, composite materials, such as PMC materials discussed above, or metals, such as light weight metals like aluminum and aluminum alloys. The additive manufacturing process used to form the structural buffer 300 or the buffer 302 is a process that is suitable for the material of the structural buffer 300 or buffer 302 and may include, for example, fused deposition modeling (FDM), fused filament fabrication (FFF), binder jetting, electron-beam melting (EBM), selective laser melting (SLM), selective laser sintering (SLS), and the like. According, the structural buffer 300 or buffer 302 can be an additively manufactured structural buffer or additively manufactured buffer, respectively.

FIG. 6A shows a first flow structure 322. The first flow structure 322 includes a plurality of flow channels 312 that direct the liquid hydrogen toward the flow passages 310. As depicted in FIG. 6A, the flow channels 312 are rectilinear, diverging from a central plane 314. The flow channels 312 thus direct the liquid hydrogen towards an adjacent first flow structure 322 resulting in turbulence or mixing of liquid hydrogen from the adjacent first flow structure 322 before flowing through the flow passages 310. This mixing slows the flow of the liquid hydrogen through the flow passages 310.

FIG. 6B shows a second flow structure 324. Similar to the first flow structure 322, the second flow structure 324 includes flow channels 316, but the flow channels 316 are curvilinear. The curved shape of the flow channels 316 further slows the liquid hydrogen and promotes mixing at the flow passages 310, particularly, when the flow channels 316 converging at the flow passages 310 rotate the liquid hydrogen in different directions.

FIG. 6C shows a third flow structure 326. This flow structure includes a flow channel 318 encircling the flow passages 310 with various curves and undulations to create turbulence and slow the flow of liquid hydrogen.

FIG. 6D shows a fourth flow structure 328. The fourth flow structure 328 includes interconnected flow passages 310 and, as depicted in FIG. 6D, may include a central chamber 332 into which the flow passages 310 direct the liquid hydrogen. The central chamber 332 may be larger than the flow passages 310. The central chamber 332 is also interconnected with adjacent central chambers 332 through horizontal interconnection passages 334 and vertical interconnection passages 336. Interconnecting the passages promotes mixing and turbulent flow within the central chamber 332, slowing the flow of liquid hydrogen through the flow passages 310.

As noted above, turbulent flow helps slow the flow of liquid hydrogen through the structural buffer 300 and the buffer 302. The flow structure 320 and, more specifically, the surfaces of the flow channels 312, 316, 318 may be rough to further promote the turbulent flow. These surfaces may have, for example, a surface roughness (RA value) from five microns to twenty microns.

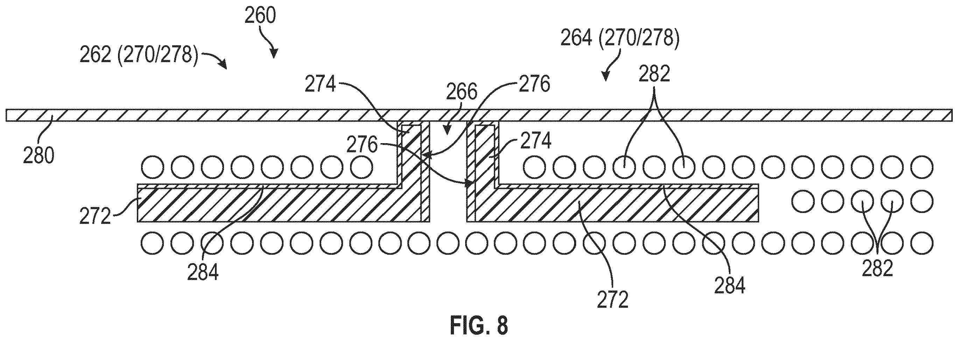

Referring back to FIG. 4, the structural buffer 300 may be held in place by a receiver 260. The receiver 260 used to hold the plate structural buffer 300 may be formed by placing two brackets (a first bracket 262 and a second bracket 264) to oppose each other with a gap 266 (FIG. 8) therebetween. The structural buffer 300 is located in the gap 266 and held in place by the first bracket 262 and the second bracket 264. The first bracket 262 and the second bracket 264 are mirror images of each other and reference numeral 270 (bracket 270, FIG. 8) is used to refer to either the first bracket 262 or the second bracket 264. The bracket 270 can better be seen in FIG. 8 and, referring to FIG. 8, each bracket 270 is L-shaped having a flange portion 272 and a projecting portion 274 projecting from the flange portion 272. The flange portion 272 and the projecting portion 274 are legs of the bracket 270 and may be positioned at a right angle to each other. The projecting portion 274 includes a gap facing surface 276 and the gap facing surface 276 of the first bracket 262 and the second bracket 264 are positioned to oppose each other across the gap 266. Although described as an L-shaped bracket, other shapes may be used with features, such as the flange portion 272, to integrate the bracket 270 and receiver 260 with the vessel wall 214.

Referring back to FIG. 5C, the receiver 260 is placed such that the receiver 260 is integrated into the vessel wall 214 to face the chamber 250. Another, corresponding receiver 260 (or receiver portion), is located on an opposite side of the vessel wall 214 and the structural buffer 300 is supported therebetween. As depicted in FIG. 5A, for example, the first bracket 262 and the second bracket 264 extend around an inner surface (e.g., an inner circumference surface) of the vessel wall 214, and form a single receiver 260 that supports the structural buffer 300 with portions of the single receiver 260 supporting opposite sides of the structural buffer 300. As depicted in FIG. 5C, however, two separate receivers 260 support opposite sides of the structural buffer 300.

A hydrogen barrier layer 284 can be formed on the inner surfaces of the receiver 260 or bracket 270. The hydrogen barrier layer 284 is shown, for example, in FIG. 8 as being formed on inner surfaces of a bracket preform 278. The hydrogen barrier layer 284 is a layer of material that protects the composite material from direct contact with hydrogen and may act as a diffusion barrier for the hydrogen. Materials suitable for use as the hydrogen barrier layer 284 may include metallic materials, such as metals and metal alloys, including aluminum, aluminum alloys, steel alloys, etc. The hydrogen barrier layer 284 may thus be a metallic layer. Non-metal materials, such as polymeric materials (e.g., polyamide, polyethylene) can be used as barrier materials due to their low hydrogen permeability. The hydrogen barrier layer 284 can be a metallic foil. The hydrogen barrier layer 284 can be a liner that is integrally formed with the bracket preform 278, such as when the reinforcing fibers of the bracket preform 278 are laid up. The hydrogen barrier layer 284 can be formed aby other means, such as by coating methods, including metal deposition methods, like chemical vapor deposition, or spray coating for example. The hydrogen barrier layer 284 can be used to prevent the movement of hydrogen and not necessarily to provide structural support. Accordingly, the hydrogen barrier layer 284 can be relatively thin such as from five mils to fifty mils. Such thicknesses also help to minimize weight.

FIG. 7 is a flow chart of a process for manufacturing the composite hydrogen storage tank 212. In the method shown in FIG. 7, the bracket 270 (or receiver 260) is first formed in step S10 and then placed on a layup tool, such as a mandrel 280 (FIG. 8), in step S20. The first bracket 262 and the second bracket 264 are each placed on the mandrel 280 to oppose each other and to form the receiver 260 in step S20. Then, the composite hydrogen storage tank 212 (FIG. 3) and, more specifically, the vessel wall 214 are formed by laying up a plurality of reinforcing fiber tows 282 (FIG. 8) on the mandrel 280 in step S30 to form a tank preform. A portion of the reinforcing fiber tows 282 can be placed on the mandrel 280 prior to the first bracket 262 and the second bracket 264 being placed on the mandrel 280. A matrix material is introduced into the tank preform, in step S40, and the tank preform is cured to form the composite hydrogen storage tank 212, in step S50.

In step S10 (and referring to FIG. 8 for the features of the bracket 270), the bracket 270 is formed, in general, by forming the flange portion 272 and the projecting portion 274. The bracket 270 and thus each of the flange portion 272 and the projecting portion 274 may be composites comprising a plurality of reinforcing fiber tows and a matrix. The methods may thus include forming preforms of the bracket 270 and, more specifically, of each of the flange portion 272 and the projecting portion 274 that comprise a plurality of reinforcing fiber tows. Various suitable methods may be used to form the preform of reinforcing fiber tows. Such methods may include laying up a plurality of plies to form an initial preform with an initial shape. Each of the plies includes a plurality of fiber tows. The plurality of plies may be laid up by hand (i.e., hand lay-up) or using an automated process including an automated lay-up system. The automated lay-up system and corresponding automated process may be, for example, an Automated Tape Laying (ATL) system, an Automated Fiber Placement (AFP) system, a Thermoplastic Fiber/Tape Placement (TTP) system, Pick-and-Place system, and the like. When the initial preform is cylindrical, such layup methods may include winding the plurality of reinforcing fiber tows around a tool, such as a mandrel, to form the initial preform with an annular, circular cylindrical shape. Other methods may be used including, weaving two-dimensional woven fabrics, weaving three-dimensional woven fabrics, or braiding. In some embodiments, a single initial preform is formed with the layup of reinforcing fiber tows, and then the initial preform is then shaped, such as by bending, to form the L-shape of the bracket 270 (referred to as a shaped preform). Alternatively, two or more separate initial preforms may be laid up with the reinforcing fiber tows and then brought together and at least temporarily secured to form the shaped preform. The shaped preform of the bracket 270 is referred to herein as a bracket preform 278.

FIG. 8 is a schematic, cross-sectional view of the bracket preform 278 on a forming tool, such as a mandrel 280, during steps S20 and S30 of FIG. 7. After forming the bracket preform 278, the bracket preform 278 is placed on the forming tool, such as the mandrel 280. In step S30 of FIG. 7, a plurality of reinforcing fiber tows 282 are laid up on the mandrel 280 to form a tank preform. As noted above, various methods may be used to form the bracket preform 278. For example, the methods may include winding the plurality of reinforcing fiber tows 282 around the mandrel 280. The reinforcing fiber tows 282 may be moved axially as the mandrel 280 is rotated to form the plurality of plies. As illustrated in FIG. 8, the reinforcing fiber tows 282 may be wound over the flange portion 272 of the bracket preform 278 to integrate the bracket preform 278 with the reinforcing fiber tows 282 and the tank preform.

Referring back to FIG. 7, the method includes introducing a matrix material in step S40. After the preform is complete (i.e., the final preform), a matrix material may be injected into the preform in step S40 to generate an infiltrated (or an impregnated) preform. When the composite component is a polymer matrix composite, polymers and/or resin may be pumped into, injected into, or otherwise provided to a mold or a cavity to infiltrate or to impregnate the dry fibers in this step. This step may be done in conjunction with step S30 when using resin transfer molding (RTM) processes, for example. Other infiltration processes may be used in this step depending upon the matrix material. As noted above, the plies may be formed using prepreg fiber tows, and, in such an embodiment, introducing and providing the matrix material occurs when the prepreg fiber tows are laid up.

The method continues with curing the infiltrated preform in step S50 to bond the composite material and, more specifically, the matrix together forming the composite component. The curing process depends upon the material and may include solidifying or otherwise hardening the matrix material around the fiber tows within the preform. For example, when the matrix material is a polymer, the curing may include both solidifying and chemically crosslinking the polymer chains. Curing the infiltrated preform can include several processes. For instance, an infiltrated preform may be debulked and cured by exposing the infiltrated preform to elevated temperatures and pressures in an autoclave. The infiltrated preform may also be subjected to one or more further processes, such as, e.g., a burn off cycle and a densification process. The curing step S50 may be done in conjunction with step S40, such as when the matrix material is injected into the final preform in a molten state and the curing step includes cooling the matrix material. When the bracket 270 (FIG. 8) is placed on the mandrel 280 (FIG. 8) as a bracket preform 278 (FIG. 8), the matrix material is introduced and cured in steps S40 and S50 along with the reinforcing fiber tows 282 forming the tank preform, and thus the bracket preform 278 is co-molded with the tank preform to form the composite hydrogen storage tank 212.

Further, the composite component may be finish machined as needed. Finish machining may define the final finished shape or the contour of the composite component. Additionally, the composite component can be coated with one or more suitable coatings, such as, e.g., an environmental barrier coating (EBC) or a polyurethane surface coating.

Instead of placing the bracket preform 278 on the mandrel 280 and co-molding the bracket preform 278 with the tank preform, the bracket preform 278 may undergo steps analogous to step S40 and S50 of FIG. 7 to form the bracket 270. The discussion of step S40 and S50 of FIG. 7 also applies here and a detailed discussion is omitted. The now cured bracket 270 may then be placed on the mandrel 280 and the process continued in the manner discussed above.

The receiver 260 has been described in conjunction with the structural buffer 300, but a similar approach may be used to form the receiver 260 for the buffers 302 and the stiffeners 304 discussed above. Depending upon the shape of the object being held by the receiver, the receiver 260 may be formed as an integral piece (having the flange portion 272 and the projecting portion 274) instead of two separate brackets (i.e., the first bracket 262 and the second bracket 264).

The composite hydrogen storage tank 212 discussed herein includes buffers 302 to slow the flow of liquid hydrogen in the chamber 250 of the composite hydrogen storage tank 212, preventing damage caused by sloshing of the liquid hydrogen during changes in orientation of the composite hydrogen storage tank 212. These changes in orientation may occur, for example, when the composite hydrogen storage tank 212 is used on board an aircraft 10 (FIG. 1) and the aircraft 10 is maneuvered. These buffers 302 may be used alone or as a stiffener 304 (e.g., a structural buffer 300) to provide strength to the composite hydrogen storage tank 212. Additionally, these buffers 302 and stiffeners 304 may be held in place by a receiver 260 that is integrally formed with the composite hydrogen storage tank 212 which minimizes leakage as compared to other methods of attaching the buffers 302 and the stiffeners 304.

Although the foregoing description is directed to the preferred embodiments, other variations and modifications will be apparent to those skilled in the art, and may be made without departing from the disclosure. Moreover, features described in connection with one embodiment may be used in conjunction with other embodiments, even if not explicitly stated above.

## Claims

1. A composite storage tank (212) for liquid hydrogen, the composite storage tank (212) comprising:
a vessel wall (214) defining a chamber (250) to hold liquid hydrogen; and
a buffer (302) located in the chamber (250), the buffer (302) including a first side (306) and a second side (308), and including a plurality of flow passages (310) that fluidly connect the first side (306) with the second side (308), **characterised in that** each flow passage (310) of the plurality of flow passages (310) is a microchannel having a hydraulic diameter from 0.2 mm to 2 mm.

2. The composite storage tank (212) of claim 1, wherein the plurality of flow passages (310) is interconnected.

3. The composite storage tank (212) of claim 1 or 2, wherein the buffer (302) is a stiffener (304) extending from one side of the vessel wall (214) to an opposite side of the vessel wall (214).

4. The composite storage tank (212) of any one of claims 1 to 3, wherein the plurality of flow passages (310) is formed in a flow structure (320), the flow structure including a plurality of flow channels (312, 316, 318) directing liquid hydrogen toward at least one flow passage (310) of the plurality of flow passages (310).

5. The composite storage tank (212) of claim 4, wherein the plurality of flow channels (312, 316, 318) includes at least one of rectilinear flow channels (312) and curvilinear flow channels (316), and/or
wherein each flow channel of the plurality of flow channels has a rough surface with a surface roughness from 5 microns to 20 microns.

6. The composite storage tank (212) of any one of claims 1 to 5, wherein the buffer (302) is connected to the vessel wall (214) by a receiver (260) integrally formed in the vessel wall (214).

7. The composite storage tank (212) of claim 6, wherein the receiver (260) comprises a first L-shaped bracket (262) positioned opposite a second L-shaped bracket (264) to form the gap (266) therebetween.

8. A method of manufacturing the composite storage tank (212) of claim 6, the method comprising:
placing the receiver (260) on a layup tool (280), the receiver (260) including a flange portion (272) and a projecting portion (274) projecting from the flange portion (272), the projecting portion (274) defining a gap (266);
laying up a plurality of reinforcing fiber tows (282) on the layup tool (280) to integrate the flange portion (272) of the receiver (260) with the plurality of reinforcing fiber tows (282), the plurality of reinforcing fiber tows (282) being laid up to form at least a portion of a preform including the receiver (260) for the composite storage tank (212), with the receiver (260) facing the chamber (250) of the composite storage tank (212);
introducing a matrix material to the preform;
curing the preform, including the matrix material, to generate the composite storage tank (212); and
inserting buffer (302) into the gap (266).

9. The method of claim 8, wherein the receiver (260) is a first receiver (260) and the method further comprises:
placing a second receiver (260) on the layup tool (280), the second receiver (260) including a flange portion (272) and a projecting portion (274) projecting from the flange portion (272), the projecting portion (274) defining a gap (266);
integrating the flange portion (272) of the second receiver (260) with the plurality of fiber tows during the step of laying up the plurality of reinforcing fiber tows (282) on the layup tool (280), the plurality of fiber tows being laid up to form at least a portion of a preform including the second receiver (260) for the composite storage tank (212), with the second receiver (260) facing a chamber (250) of the composite storage tank (212) and being positioned on a portion of the preform opposite the first receiver (260); and
inserting the buffer (302) into the gap (266) of the second receiver (260).

10. The method of claim 8 or 9, wherein the plurality of reinforcing fiber tows (282) includes prepreg fiber tows to introduce the matrix material, or
wherein introducing a matrix material includes injecting the matrix material into the preform to generate an infiltrated preform, and curing the preform includes curing the infiltrated preform.

11. The method of any one of claims 8 to 10, wherein the layup tool (280) is a mandrel (280) and laying up the plurality of reinforcing fiber tows (282) includes applying the plurality of reinforcing fiber tows (282) to the mandrel (280) as the mandrel (280) rotates.

12. The method of any one of claims 8 to 11, wherein the receiver (260) is a preform comprising a plurality of reinforcing fiber tows (282), or
wherein the receiver (260) is a composite component comprising a plurality of reinforcing fiber tows (282) embedded in an at least a partially cured matrix.

13. The method of any one of claims 8 to 12, wherein the receiver (260) comprises a first L-shaped bracket (262) positioned opposite a second L-shaped bracket (264) to form the gap (266) therebetween.

14. The method of any one of claims 8 to 13, further comprising forming the receiver (260) by forming the projecting portion (274) and forming the flange portion (272).

15. The method of claim 14, wherein the projecting portion (274) is a projecting preform comprising a plurality of reinforcing fiber tows (282) and the flange portion (272) is a flange preform comprising a plurality of reinforcing fiber tows (282).

## Patentansprüche

1. Verbundspeichertank (212) für flüssigen Wasserstoff, wobei der Verbundspeichertank (212) umfasst:
eine Behälterwand (214), die eine Kammer (250) zum Aufnehmen von flüssigem Wasserstoff definiert; und
einen in der Kammer (250) befindlichen Puffer (302), wobei der Puffer (302) eine erste Seite (306) und eine zweite Seite (308) umfasst und eine Mehrzahl von Strömungsdurchgängen (310), die die erste Seite (306) mit der zweiten Seite (308) strömungstechnisch verbinden, umfasst, **dadurch gekennzeichnet, dass**
jeder Strömungsdurchgang (310) der Mehrzahl von Strömungsdurchgängen (310) ein Mikrokanal mit einem hydraulischen Durchmesser von 0,2 mm bis 2 mm ist.

2. Verbundspeichertank (212) nach Anspruch 1, wobei die Mehrzahl von Strömungsdurchgängen (310) miteinander verbunden sind.

3. Verbundspeichertank (212) nach Anspruch 1 oder 2, wobei der Puffer (302) eine Versteifung (304) ist, die sich von einer Seite der Behälterwand (214) zu einer gegenüberliegenden Seite der Behälterwand (214) erstreckt.

4. Verbundspeichertank (212) nach einem der Ansprüche 1 bis 3, wobei die Mehrzahl von Strömungsdurchgängen (310) in einer Strömungsstruktur (320) ausgebildet ist, wobei die Strömungsstruktur eine Mehrzahl von Strömungskanälen (312, 316, 318) aufweist, die flüssigen Wasserstoff zu mindestens in Richtung mindestens eines Strömungsdurchgangs (310) der Mehrzahl von Strömungsdurchgängen (310) leiten.

5. Verbundspeichertank (212) nach Anspruch 4, wobei die Mehrzahl von Strömungskanälen (312, 316, 318) einen geradlinigen Strömungskanal (312) und/oder einen gekrümmten Strömungskanal (316) aufweist, und/oder
wobei jeder Strömungskanal der Mehrzahl von Strömungskanälen eine raue Oberfläche mit einer Oberflächenrauheit von 5 Mikrometern bis 20 Mikrometern aufweist.

6. Verbundspeichertank (212) nach einem der Ansprüche 1 bis 5, wobei der Puffer (302) über eine in der Behälterwand (214) einstückig ausgebildete Aufnahme (260) mit der Behälterwand (214) verbunden ist.

7. Verbundspeichertank (212) nach Anspruch 6, wobei die Aufnahme (260) eine erste L-förmige Halterung (262) umfasst, die einer zweiten L-förmigen Halterung (264) gegenüberliegend positioniert ist, um dazwischen den Spalt (266) zu bilden.

8. Verfahren zur Herstellung des Verbundspeichertanks (212) nach Anspruch 6, wobei das Verfahren umfasst:
Platzieren der Aufnahme (260) auf ein Ablegewerkzeug (280), wobei die Aufnahme (260) einen Flanschabschnitt (272) und einen vom Flanschabschnitt (272) vorstehenden Abschnitt (274) aufweist, wobei der vorstehende Abschnitt (274) einen Spalt (266) definiert;
Ablegen einer Mehrzahl von Verstärkungsfasersträngen (282) auf das Ablegewerkzeug (280), um den Flanschabschnitt (272) der Aufnahme (260) mit der Mehrzahl von Verstärkungsfasersträngen (282) zusammenzubringen, wobei die Mehrzahl von Verstärkungsfasersträngen (282) so abgelegt werden, dass sie zumindest einen Abschnitt einer Vorform bilden, die die Aufnahme (260) für den Verbundspeichertank (212) umfasst, wobei die Aufnahme (260) der Kammer (250) des Verbundspeichertanks (212) zugewandt ist;
Einbringen eines Matrixmaterials in die Vorform;
Aushärten der das Matrixmaterial umfassenden Vorform, um den Verbundspeichertank (212) zu erzeugen; und
Einsetzen eines Puffers (302) in den Spalt (266).

9. Verfahren nach Anspruch 8, wobei die Aufnahme (260) eine erste Aufnahme (260) ist und das Verfahren ferner umfasst:
Platzieren einer zweiten Aufnahme (260) auf das Ablegewerkzeug (280), wobei die zweite Aufnahme (260) einen Flanschabschnitt (272) und einen von dem Flanschabschnitt (272) vorstehenden Vorsprung (274) umfasst, wobei der vorstehende Abschnitt (274) einen Spalt (266) definiert;
Zusammenbringen des Flanschabschnitts (272) der zweiten Aufnahme (260) mit der Mehrzahl von Fasersträngen während des Ablegens der Mehrzahl von Verstärkungsfasersträngen (282) auf dem Ablegewerkzeug (280), wobei die Mehrzahl von Fasersträngen so abgelegt werden, dass sie zumindest einen Abschnitt einer Vorform bilden, die die zweite Aufnahme (260) für den Verbundspeichertank (212) umfasst, wobei die zweite Aufnahme (260) einer Kammer (250) des Verbundspeichertanks (212) zugewandt ist und an einem dem ersten Aufnehmer (260) gegenüberliegenden Abschnitt der Vorform positioniert ist; und
Einsetzen des Puffers (302) in den Spalt (266) der zweiten Aufnahme (260).

10. Verfahren nach Anspruch 8 oder 9, wobei die Mehrzahl der Verstärkungsfaserstränge (282) Prepreg-Faserstränge umfasst, um das Matrixmaterial einzubringen, oder
wobei das Einbringen eines Matrixmaterials das Einspritzen des Matrixmaterials in die Vorform, um eine infiltrierte Vorform zu erzeugen, umfasst und das Aushärten der Vorform das Aushärten der infiltrierten Vorform umfasst.

11. Verfahren nach einem der Ansprüche 8 bis 10, wobei das Ablegewerkzeug (280) ein Dorn (280) ist und das Ablegen der Mehrzahl der Verstärkungsfaserstränge (282) das Aufbringen der Mehrzahl von Verstärkungsfasersträngen (282) auf den Dorn (280) umfasst, während sich der Dorn (280) dreht.

12. Verfahren nach einem der Ansprüche 8 bis 11, wobei die Aufnahme (260) eine Vorform ist, die eine Mehrzahl von Verstärkungsfasersträngen (282) umfasst, oder
wobei die Aufnahme (260) ein Verbundbauteil ist, das eine Mehrzahl von Verstärkungsfasersträngen (282) umfasst, die in eine zumindest teilweise ausgehärtete Matrix eingebettet sind.

13. Verfahren nach einem der Ansprüche 8 bis 12, wobei die Aufnahme (260) eine erste L-förmige Halterung (262) umfasst, die einer zweiten L-förmigen Halterung (264) gegenüberliegend positioniert ist, um dazwischen den Spalt (266) zu bilden.

14. Verfahren nach einem der Ansprüche 8 bis 13, ferner umfassend das Ausbilden der Aufnahme (260) durch Ausbilden des vorstehenden Abschnitts (274) und Ausbilden des Flanschabschnitts (272) umfasst.

15. Verfahren nach Anspruch 14, wobei der vorstehende Abschnitt (274) eine vorstehende Vorform ist, die eine Mehrzahl von Verstärkungsfasersträngen (282) umfasst, und der Flanschabschnitt (272) eine Flanschvorform ist, die eine Mehrzahl von Verstärkungsfasersträngen (282) umfasst.

## Revendications

1. Réservoir de stockage composite (212) pour hydrogène liquide, le réservoir de stockage composite (212) comprenant :
une paroi de cuve (214) définissant une chambre (250) destinée à contenir de l'hydrogène liquide ; et
un tampon (302) situé dans la chambre (250), le tampon (302) comportant un premier côté (306) et un second côté (308), et comportant une pluralité de passages d'écoulement (310) qui relient de manière fluidique le premier côté (306) au second côté (308), **caractérisé en ce que** chaque passage d'écoulement (310) de la pluralité de passages d'écoulement (310) est un microcanal présentant un diamètre hydraulique compris entre 0,2 mm et 2 mm.

2. Réservoir de stockage composite (212) de la revendication 1, dans lequel la pluralité de passages d'écoulement (310) est interconnectée.

3. Réservoir de stockage composite (212) de la revendication 1 ou 2, dans lequel le tampon (302) est un raidisseur (304) s'étendant d'un côté de la paroi de cuve (214) à un côté opposé de la paroi de cuve (214).

4. Réservoir de stockage composite (212) de l'une quelconque des revendications 1 à 3, dans lequel la pluralité de passages d'écoulement (310) est formée dans une structure d'écoulement (320), la structure d'écoulement comprenant une pluralité de canaux d'écoulement (312, 316, 318) dirigeant l'hydrogène liquide vers au moins un passage d'écoulement (310) de la pluralité de passages d'écoulement (310).

5. Réservoir de stockage composite (212) de la revendication 4, dans lequel la pluralité de canaux d'écoulement (312, 316, 318) comprend au moins l'un parmi des canaux d'écoulement rectilignes (312) et des canaux d'écoulement curvilignes (316), et/ou
dans lequel chaque canal d'écoulement de la pluralité de canaux d'écoulement présente une surface rugueuse dont la rugosité de surface est comprise entre 5 microns et 20 microns.

6. Réservoir de stockage composite (212) de l'une quelconque des revendications 1 à 5, dans lequel le tampon (302) est relié à la paroi de cuve (214) par un récepteur (260) formé d'un seul tenant dans la paroi de cuve (214).

7. Réservoir de stockage composite (212) de la revendication 6, dans lequel le récepteur (260) comprend un premier support en forme de L (262) positionné en face d'un second support en forme de L (264) de manière à former l'espace (266) entre ceux-ci.

8. Procédé de fabrication du réservoir de stockage composite (212) de la revendication 6, le procédé comprenant :
le placement du récepteur (260) sur un outil de stratification (280), le récepteur (260) comprenant une partie bride (272) et une partie en saillie (274) faisant saillie à partir de la partie bride (272), la partie en saillie (274) définissant un espace (266) ;
la stratification d'une pluralité de torons de fibres de renfort (282) sur l'outil de stratification (280) afin d'intégrer la partie bride (272) du récepteur (260) à la pluralité de torons de fibres de renfort (282), la pluralité de torons de fibres de renfort (282) étant stratifiée de manière à former au moins une partie d'une préforme comprenant le récepteur (260) pour le réservoir de stockage composite (212), le récepteur (260) faisant face à la chambre (250) du réservoir de stockage composite (212) ;
l'introduction d'un matériau matriciel dans la préforme ;
le durcissement de la préforme, y compris du matériau matriciel, pour générer le réservoir de stockage composite (212) ; et
l'insertion du tampon (302) dans l'espace (266).

9. Procédé de la revendication 8, dans lequel le récepteur (260) est un premier récepteur (260) et le procédé comprend en outre :
le placement d'un second récepteur (260) sur l'outil de stratification (280), le second récepteur (260) comprenant une partie bride (272) et une partie en saillie (274) faisant saillie à partir de la partie bride (272), la partie en saillie (274) définissant un espace (266) ;
l'intégration de la partie bride (272) du second récepteur (260) à la pluralité de torons de fibres au cours de l'étape de stratification de la pluralité de torons de fibres de renfort (282) sur l'outil de stratification (280), la pluralité de torons de fibres étant stratifiée de manière à former au moins une partie d'une préforme comprenant le second récepteur (260) pour le réservoir de stockage composite (212), le second récepteur (260) faisant face à une chambre (250) du réservoir de stockage composite (212) et étant positionné sur une partie de la préforme opposée au premier récepteur (260) ; et
l'insertion du tampon (302) dans l'espace (266) du second récepteur (260).

10. Procédé de la revendication 8 ou 9, dans lequel la pluralité de torons de fibres de renfort (282) comprend des torons de fibres préimprégnés pour introduire le matériau matriciel, ou
dans lequel l'introduction d'un matériau matriciel comprend l'injection du matériau matriciel dans la préforme pour générer une préforme infiltrée, et le durcissement de la préforme comprend le durcissement de la préforme infiltrée.

11. Procédé de l'une quelconque des revendications 8 à 10, dans lequel l'outil de stratification (280) est un mandrin (280) et la stratification de la pluralité de torons de fibres de renfort (282) comprend l'application de la pluralité de torons de fibres de renfort (282) sur le mandrin (280) pendant que le mandrin (280) tourne.

12. Procédé de l'une quelconque des revendications 8 à 11, dans lequel le récepteur (260) est une préforme comprenant une pluralité de torons de fibres de renfort (282), ou
dans lequel le récepteur (260) est un composant composite comprenant une pluralité de torons de fibres de renfort (282) noyés dans une matrice au moins partiellement durcie.

13. Procédé de l'une quelconque des revendications 8 à 12, dans lequel le récepteur (260) comprend un premier support en forme de L (262) positionné en face d'un second support en forme de L (264) afin de former l'espace (266) entre ceux-ci.

14. Procédé de l'une quelconque des revendications 8 à 13, comprenant en outre la formation du récepteur (260) par la formation de la partie en saillie (274) et la formation de la partie bride (272).

15. Procédé de la revendication 14, dans lequel la partie en saillie (274) est une préforme en saillie comprenant une pluralité de torons de fibres de renfort (282) et la partie bride (272) est une préforme de bride comprenant une pluralité de torons de fibres de renfort (282).
